# EUROPÄISCHE PATENTSCHRIFT

(11) **EP 2 882 975 B1**
(45) Veröffentlichungstag und Bekanntmachung des Hinweises auf die Patenterteilung: **13.07.2016**
(21) Anmeldenummer: 13753564.7
(22) Anmeldetag: 01.08.2013
(51) Int. Cl.: F16D 25/00

(54) **KOLBEN-ZYLINDER-ANORDNUNG, INSBESONDERE FÜR EIN KUPPLUNGSBETÄTIGUNGSSYSTEM IN EINEM KRAFTFAHRZEUG**
PISTON-CYLINDER ARRANGEMENT, IN PARTICULAR FOR A CLUTCH ACTUATING SYSTEM IN A MOTOR VEHICLE
DISPOSITIF À PISTON-CYLINDRE, EN PARTICULIER POUR UN SYSTÈME D'ACTIONNEMENT D'EMBRAYAGE DANS UN VÉHICULE AUTOMOBILE

(30) Priorität: 09.08.2012 DE 102012214129
(43) Veröffentlichungstag der Anmeldung: 17.06.2015
(73) Patentinhaber: Schaeffler Technologies AG & Co. KG, 91074 Herzogenaurach (DE)
(72) Erfinder: SIFFELET, David, 45170 Neuville aux Bois (FR); CONSTANTIN, Sebastien, F-45800 St Jean de Braye (FR); CHRISTIAENS, Yannick, F-45470 Loury (FR)
(86) Internationale Anmeldenummer: PCT/DE2013/200088
(87) Internationale Veröffentlichungsnummer: WO 2014/023305

(56) Entgegenhaltungen:
- EP-A1- 0 950 827
- EP-A1- 1 602 544
- DE-A1- 10 323 797

## Beschreibung

Die Erfindung betrifft eine Kolben-Zylinder-Anordnung, insbesondere für ein Kupplungsbetätigungssystem in einem Kraftfahrzeug, mit einem Kolben, welcher axial beweglich im Inneren eines Zylinders angeordnet ist, und einem induktiven Sensorsystem, umfassend ein am Kolben befestigtes leitfähiges Target und einen Sensor, welcher an dem Zylinder Eine solche Anordnung ist aus der EP1 602 544 A1 bekannt.

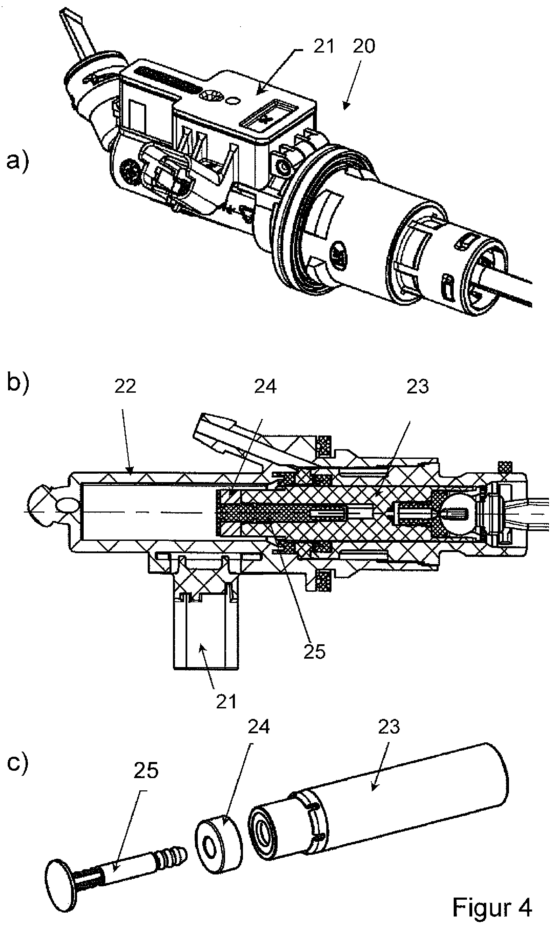

Um beispielsweise bei Fahrzeugen mit Stopp-Start-Systemen die gewohnte Fahrweise beizubehalten, ist ein frühzeitiges Erkennen des Fahrerwunsches hilfreich. Wegsensoren, die in Geberzylindern des Kupplungsbetätigungssystems des Kraftfahrzeuges angeordnet sind, erfüllen diese Anforderungen. In der Massenproduktion werden verschiedene Technologien von Sensoren wie beispielsweise lineare Sensoren oder Halleffektsensoren genutzt, die den Einsatz eines Magneten zur Feststellung der Position des Kolbens voraussetzen. Dabei werden zylindrische oder zylindersegmentartige Magneten genutzt. Wie aus Figur 4 ersichtlich, ist der zylindrische Magnet 24 beispielsweise an dem Kolben 23 geklammert. Figur 4a zeigt einen Geberzylinder 20, an welchen außen an dem Zylindergehäuse der Sensor 21 befestigt ist. Aus dem Längsschnitt der Figur 4b ist ersichtlich, dass im Inneren des Zylindergehäuses 22 ein Kolben 23 axial beweglich gelagert. Der Kolben 23 trägt dabei an seiner Stirnseite einen ebenfalls zylinderförmigen Magneten 24, welcher eine Befestigungsklammer 25 umschließt, die durch den Magneten 24 hindurch in den Kolben 23 eintaucht und dabei den Magneten 24 am Kolben 23 befestigt. Eine Explosionsdarstellung in Figur 4c zeigt noch einmal die Einzelteile zur Befestigung des Magneten 24, bestehend aus der Befestigungsklammer 25 und dem Kolben 23. Die Befestigungsklammer 25 stellt dabei ein zusätzliches Element dar, welches für die Fixierung des Magneten 24 am Kolben 23 notwendig ist.

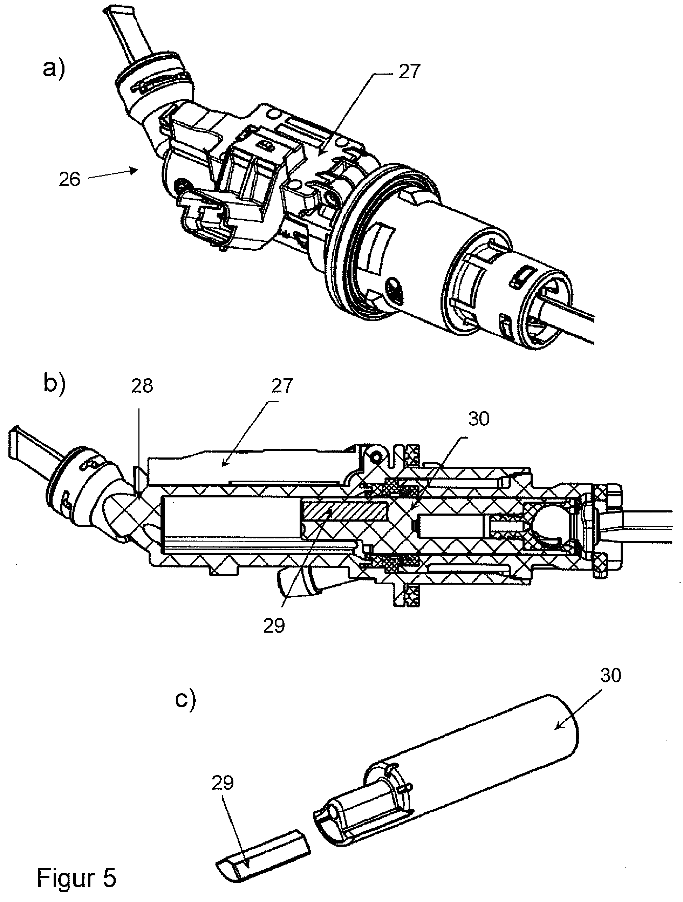

Figur 5 zeigt eine andere Befestigungstechnologie an einem Geberzylinder 26. Auch in diesem Fall ist gemäß Figur 5a der Sensor 27 am Gehäuse 28 des Geberzylinders 26 befestigt. Ein zylindersegmentartiger Magnet 29 wird auf der Stirnseite des Kolbens 30 in das Innere des Kolbens 30 eingeschoben, was eine sehr kostenintensive Herstellung des Geberzylinders 26 nach sich zieht (Figur 5b). Der zylindersegmentartige Magnet 29 wird in dem Kolben 30 verklebt, wobei das Kleben einen zeitaufwändigen Schritt während des Montageprozesses darstellt.

Andere Wegsensoren arbeiten beispielsweise nach einem induktiven Wirkprinzip, wobei der Spulen enthaltende Sensor und/oder eine Ansteuer- und/oder Auswerteschaltung außen an dem Zylinder, vorzugsweise auf einer Leiterplatte, angeordnet sind. Im Inneren des Zylinders bewegt sich ein Kolben, auf welchem ein elektrisch leitfähiges Target befestigt ist, welches bei der Bewegung des Kolbens am Spulensystem vorbei geleitet wird, dabei in das Magnetfeld des Spulensystems eintaucht und dieses verändert. Das veränderte Magnetfeld ist ein Maß dafür, welchen Weg der Kolben überstrichen hat, was repräsentativ für den Fahrerwunsch ist.

Das leitfähige Target muss dabei an dem Kolben mit hoher Präzision befestigt werden, damit dem induktiven Sensor erlaubt ist, die Position des Kolbens mit guter Wiederholbarkeit festzustellen.

Der Erfindung liegt somit die Aufgabe zugrunde, eine Kolben-Zylinder-Anordnung anzugeben, bei welcher das Target kostengünstig an dem Kolben befestigt wird und trotzdem eine hohe Genauigkeit bei der Bestimmung der Position des Kolbens durch den induktiven Sensor gewährleistet wird.

Erfindungsgemäß wird die Aufgabe dadurch gelöst, dass das leitfähige Target als Hülse ausgebildet ist, welche über einen annähernd komplementären zylinderförmigen Abschnitt des Kolbens geschoben ist. Die Hülse kann dabei ohne zusätzliche Hilfsmittel oder Kleben einfach an dem Kolben befestigt werden, indem der Durchmesser der Hülse annähernd genauso groß gewählt wird wie der Außendurchmesser des komplementären zylinderförmigen Abschnittes. Die Hülse klemmt sich somit an dem Kolben fest, wodurch eine kostengünstige Herstellungsmethode der Kolben-Zylinder-Anordnung gefunden ist.

Vorteilhafterweise weist die Hülse einen Längsschlitz zur temporären Aufweitung bei der Befestigung an dem komplementären zylinderförmigen Abschnitt des Kolbens auf. Dies hat den Vorteil, dass die Durchmesser von Hülse und komplementärem zylinderförmigen Abschnitt des Kolbens annähernd gleich gewählt werden können. Da sich bei der Montage der Hülse auf dem Kolben der Längsschlitz aufweitet und somit der Durchmesser der Hülse etwas vergrößert wird, kann die Hülse einfach auf dem Kolben montiert werden. Nach Beendigung der Montage liegt die Hülse fest an der Oberfläche des zylinderförmigen Abschnittes des Kolbens an.

In einer Ausgestaltung ist der zylinderförmige Abschnitt durch mindestens einen radialen Vorsprung begrenzt, bis zu welchem die Hülse auf den Kolben aufgeschoben ist. Der radiale Vorsprung trägt zur korrekten Positionierung der Hülse auf dem Kolben bei. Insbesondere in der Massenproduktion kann durch den radialen Vorsprung sichergestellt werden, dass die Hülse immer mit hoher Präzision auf dem Kolben befestigt wird, wodurch der induktive Sensor ein reproduzierbares Signal erzeugen kann, da eine Verschiebung der Hülse während des Einsatzes der Kolben-Zylinder-Anordnung im Kraftfahrzeug nicht möglich ist.

In einer Variante weist der zylinderähnliche Abschnitt auf einer der Hülse zugewandten Seite eine abgeschrägte Kante zur Führung der Hülse während der Montage auf. Die abgeschrägte Kante, welche auch als Fase bezeichnet wird, dient dazu, die Hülse beim Aufbringen auf den zylinderähnlichen Abschnitt allmählich aufzuweiten, so dass sie besser montiert werden kann.

In einer Weiterbildung endet die abgeschrägte Kante an einer Stufe, welche die montierte Hülse fixiert. Somit wird die Hülse auf einer Seite durch den radialen Vorsprung und auf der anderen Seite durch die Stufe begrenzt, so dass sich die Hülse bei der Nutzung der Kolben-Zylinder-Anordnung in ihrer Position nicht verändern kann.

In einer Ausgestaltung ist der radiale Vorsprung des zylinderförmigen Abschnittes umlaufend ausgebildet. Dies gewährleistet eine besonders sichere Positionierung der Hülse auf dem Kolben.

In einer Variante besteht die Hülse aus einem Leichtmetall, vorzugsweise Aluminium. Die Verwendung eines solchen Leichtmetalls vereinfacht den Herstellungsprozess der Hülse, der etwa mit der Herstellung einer Abstandshülse vergleichbar ist. Aus Aluminium wird dabei eine Platte geprägt oder gepresst, welche anschließend gerollt wird. Die sich berührungslos gegenüber liegenden Enden der Platte bilden dabei den Längsschlitz. Auf Grund des Längsschlitzes kann die Hülse jederzeit ihren Durchmesser ändern.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines elektrohydraulischen Kupplungsbetätigungssystems in einem Kraftfahrzeug
- Figur 2:: ein Ausführungsbeispiel eines erfindungsgemäßen Geberzylinders gemäß Figur 1
- Figur 3:: Darstellung des Montageprozesses des Geberzylinders gemäß Figur 2
- Figur 4:: ein erstes Ausführungsbeispiel für einen Geberzylinder nach dem Stand der Technik
- Figur 5:: ein zweites Ausführungsbeispiel für einen Geberzylinder nach dem Stand der Technik

Gleiche Merkmale sind mit gleichen Bezugszeichen gekennzeichnet.

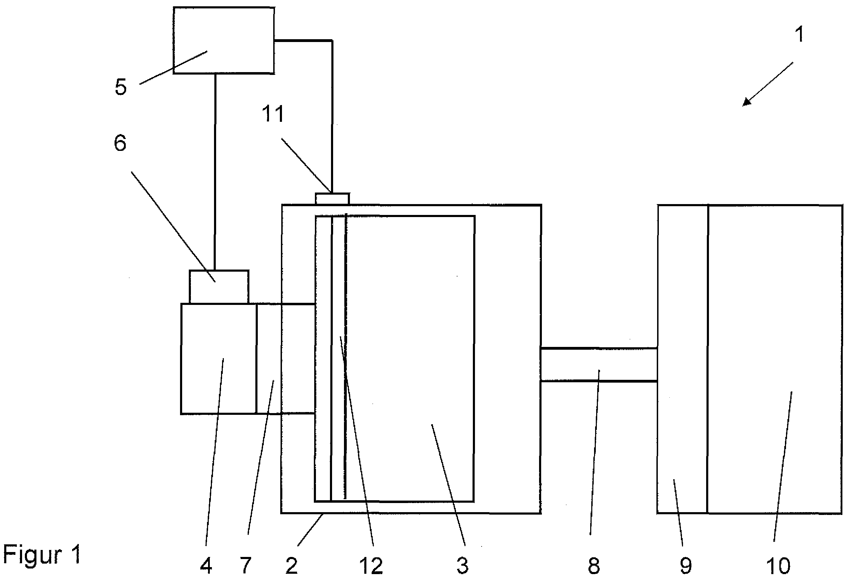

In Figur 1 ist ein elektrohydraulisches Kupplungsbetätigungssystem 1 dargestellt, wie es heute in Kraftfahrzeugen zum Einsatz kommt. Ein solches Kupplungsbetätigungssystem 1 umfasst ein elektrohydraulisches Betätigungssystem in Form eines Geberzylinders 2, 3 auf, welcher einen als Gehäuse ausgebildeten Zylinder 2 aufweist, in dem ein Kolben 3 beweglich gelagert ist. Der Kolben 3 wird von einem elektrisch kommutierten Elektromotor 4 angetrieben, der von einem Steuergerät 5 über eine Endstufe 6 angesteuert wird. Die Endstufe 6 ist gemeinsam mit dem Elektromotor 4 an dem Zylinder 2 befestigt. Die radiale Bewegung des Elektromotors 4 wird über ein Getriebe 7 in die axiale Bewegung des Kolbens 3 umgesetzt. Es sei darauf verwiesen, dass nicht nur elektrohydraulische Kupplungssysteme bekannt sind, sondern der Kolben auch direkt, unter Verzicht auf den Elektromotor 4, mit dem Fahrpedal des Fahrers des Kraftfahrzeuges verbunden werden kann.

Über eine Hydraulikleitung 8 ist der Geberzylinder 2, 3 mit einem Nehmerzylinder 9 verbunden, welcher eine Kupplung 10 betätigt. Die Verstellung der Position der Kupplung 10 erfolgt aufgrund des Antriebes des Kolbens 3 durch den Elektromotor 4. Der Geberzylinder 2, 3 und die Kupplung 10 mit dem Nehmerzylinder 9 sind dabei räumlich getrennt im Kraftfahrzeug angeordnet. Außen an dem als Gehäuse dienenden Zylinder 2 ist eine Sensor 11 befestigt, wobei die in dem Sensor 11 enthaltene und nicht weiter dargestellte Spulenanordnung einen elektrisch leitfähigen Target 12 gegenüberliegt, das innerhalb des Zylinders 2 außen am beweglich gelagerten Kolben 3 befestigt ist.

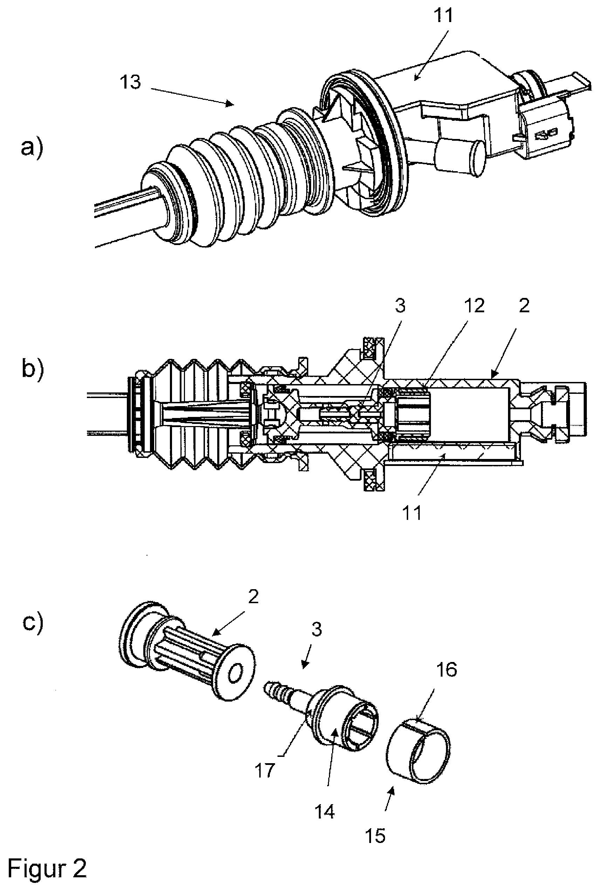

In Figur 2 ist der Geberzylinder 13 genauer dargestellt. Wie aus Figur 2a ersichtlich, ist an dem als Außengehäuse dienenden Zylinder 2 des Geberzylinders 13 der induktive Sensor 11 fest angeordnet. Der Längsschnitt in Figur 2b zeigt, dass innerhalb des Zylinders 2 des Geberzylinders 13 der Kolben 3 gelagert ist. Der Kolben 3 weist einen zylindrischen Abschnitt 14 auf, welcher durch einen radial umlaufenden Vorsprung 17 begrenzt wird (Figur 2c). Im vorliegenden Fall ist der zylindrische Abschnitt 140 an einem Halterungselement ausgebildet, das mittels Einpressen mit einem Kolben-/Grundkörper verbunden wird. Abweichend sind natürlich auch andere Verbindungen wie Formschluss oder Kleben oder ein einteiliger Kolben denkbar. Auf diesen zylinderförmigen Abschnitt 14 des Kolbens 3 wird eine Hülse 15 geschoben, die aus Aluminium besteht und welche einen Längsschlitz 16 aufweist. Die Hülse 15 ist dabei eine spezielle Ausgestaltung des leitfähigen Targets 12, welches zusammen mit dem Sensor 11 die Position des Kolbens 3 bestimmt.

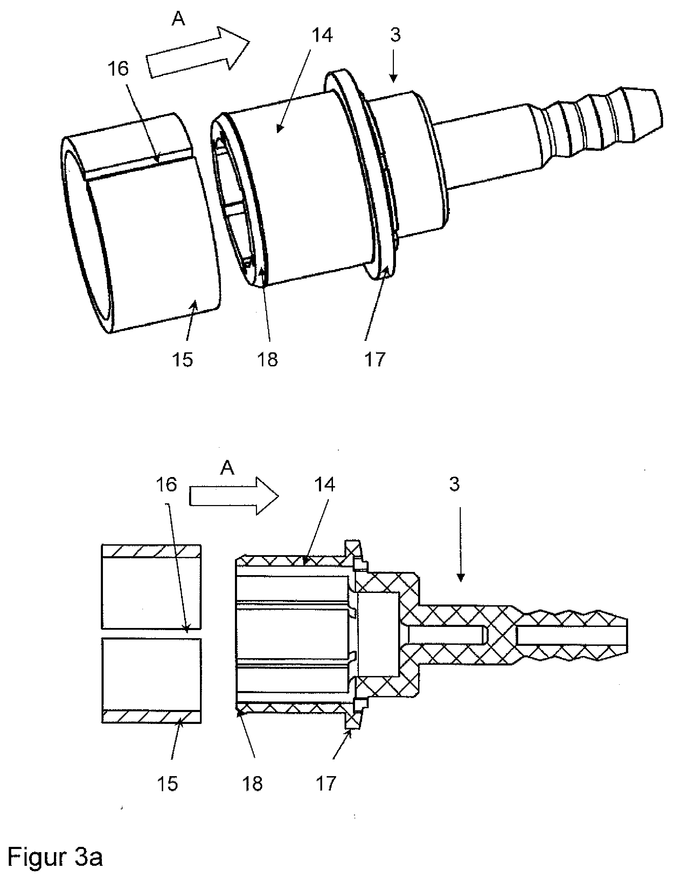

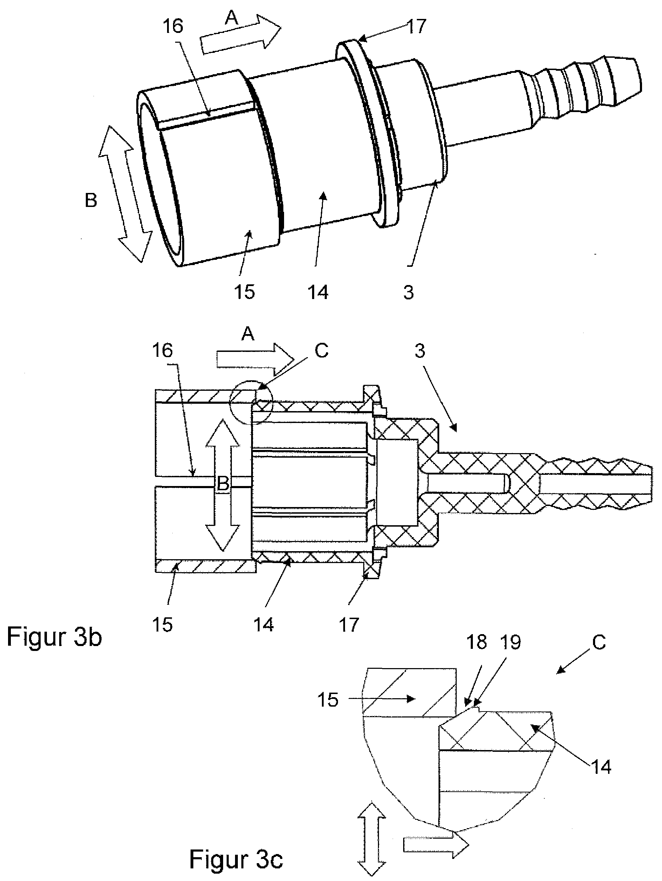

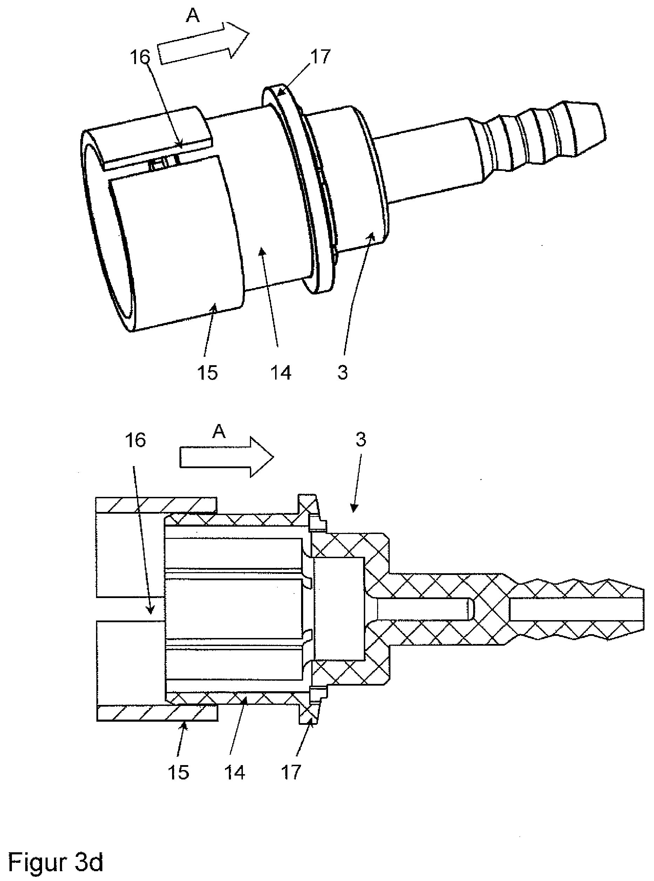

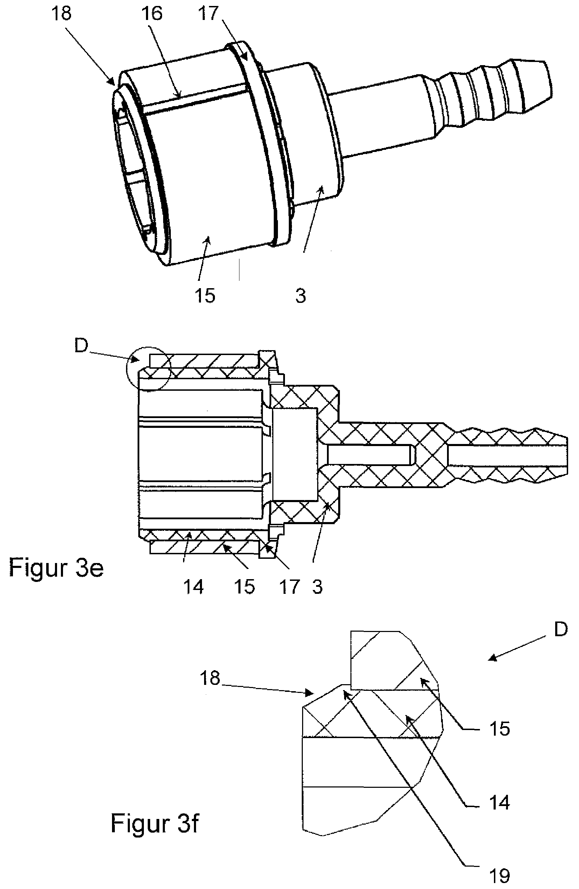

Anhand der Darstellungen in Figur 3 soll die Montage der Hülse 15 an dem Kolben 3 näher erläutert werden. Dabei sind für jeden Montageschritt immer eine Perspektivdarstellung und ein Längsschnitt des Geberzylinders 13 dargestellt. Figur 3a zeigt, dass die Hülse 15 beim Aufziehen auf den zylinderförmigen Abschnitt 14 des Kolbens 3 in Richtung des Pfeils A bewegt und dabei geweitet wird. Dies erfolgt, indem die Hülse 15 an einem, der Hülse 15 zugewandten Ende des Abschnittes 14 über eine Fase 18, die an dem zylinderförmigen Abschnitt 14 des Kolbens 3 ausgebildet ist und eine abgeschrägte umlaufende Kante darstellt, geführt und aufgeweitet wird, was durch den Pfeil B in Figur 3b verdeutlicht ist. Durch das Aufschieben der Hülse 15 über diese Fase 18 wird der Durchmesser der Hülse 15 geweitet, was aufgrund des Längsschlitzes 16 einfach möglich ist.

Die Fase 18 weist dabei an ihrem Ende eine Stufe 19 auf, hinter welcher sich der Durchmesser des zylinderförmigen Abschnittes 14 des Kolbens 3 geringfügig verringert (Figur 3c). Hat die Hülse 15 die Stufe 19 erreicht, so hat sich die Hülse 15 aufgeweitet und einen größeren Durchmesser angenommen als im Ruhezustand. Anschließend wird die gesamte Hülse 15 über die Stufe 19 geschoben (Figur 3d), bis die Hülse 15 den radial umlaufenden Vorsprung 17 erreicht hat. Der radial umlaufende Vorsprung 17 begrenzt die Position der Hülse 15 in Richtung des Pfeils A (Figur 3e).

Die Breite der Hülse 15 ist so bemessen, dass sie kurz hinter dem Vorsprung 19 endet (Figur 3f). Da auch das Ende der Hülse 15 den Vorsprung 19 passiert hat, verclipst sich die Hülse 15 hinter der Stufe 19 und reduziert dabei ihren Durchmesser wieder geringfügig. Auf diese Art und Weise liegt die Hülse 15 fest an dem zylinderförmigen Abschnitt 14 des Kolbens 3 an und wird auf der einen Seite durch die Stufe 19 und auf der anderen Seite durch den radial umlaufenden Vorsprung 17 so gehalten, dass sich ihre Position nicht mehr ändern kann.

Eine solche einfache Montage, die ohne den Einsatz zusätzlicher Hilfsmittel auskommt, gewährleistet eine sichere Position der Hülse 15 am Kolben 3. Aufgrund dieser Anordnung behält das elektrisch leitende Target in Form der Hülse 15 während der Lebensdauer der Kolben-Zylinder-Anordnung 2, 3 ihre Position bei, weshalb der Sensor 11, welcher außen am Zylinder 2 befestigt ist, immer ein reproduzierbares Sensorsignal abgeben kann.

### Bezugszeichenliste

- 1: Kupplungsbetätigungssystem
- 2: Zylinder
- 3: Kolben
- 4: Elektromotor
- 5: Steuergerät
- 6: Endstufe
- 7: Getriebe
- 8: Hydraulikleitung
- 9: Nehmerzylinder
- 10: Kupplung
- 11: Sensor
- 12: Leitfähiges Target
- 13: Geberzylinder
- 14: Zylinderförmiger Abschnitt des Kolbens
- 15: Hülse
- 16: Längsschlitz
- 17: Radial umlaufender Vorsprung
- 18: Fase
- 19: Stufe
- 20: Geberzylinder
- 21: Sensor
- 22: Zylindergehäuse
- 23: Kolben
- 24: Magnet
- 25: Befestigungsklammer
- 26: Geberzylinder
- 27: Sensor
- 28: Gehäuse
- 29: Magnet
- 30: Kolben

## Patentansprüche

1. Kolben-Zylinder-Anordnung, insbesondere für ein Kupplungsbetätigungssystem in einem Kraftfahrzeug, mit einem Kolben (3), welcher axial beweglich im Inneren eines Zylinders (2) angeordnet ist und einem induktiven Sensorsystem, umfassend ein am Kolben (3) befestigtes leitfähiges Target (12) und einen Sensor (11), welcher an dem Zylinder (2) befestigt ist, wobei das leitfähige Target (12) als Hülse (15) ausgebildet ist, welche über einen annähernd komplementären zylinderförmigen Abschnitt (14) des Kolbens (3) geschoben ist, **dadurch gekennzeichnet, dass** die Hülse (15) einen Längsschlitz (16) zur temporären Aufweitung bei der Befestigung an dem komplementären zylinderförmigen Abschnitt (14) des Kolbens (3) aufweist.

2. Kolben-Zylinder-Anordnung nach Anspruch 1, **dadurch gekennzeichnet, dass** der zylinderförmige Abschnitt (14) Teil eines separaten Halterungselements ist, das mit einem Kolbengrundkörper kraft- und/oder formschlüssig, insbesondere durch Einpressen, verbunden ist.

3. Kolben-Zylinder-Anordnung nach Anspruch 1 oder 2, **dadurch gekennzeichnet, dass** der zylinderförmige Abschnitt (14) durch mindestens einen radialen Vorsprung (17) begrenzt ist, bis zu welchem die Hülse (15) auf den Kolben (3) aufgeschoben ist.

4. Kolben-Zylinder-Anordnung nach mindestens einem der Ansprüche 1, 2 oder 3, **dadurch gekennzeichnet, dass** der zylinderförmige Abschnitt (14) auf einer, der Hülse (15) zugewandten Seite eine abgeschrägte Kante (18) zur Führung der Hülse (15) während der Montage aufweist.

5. Kolben-Zylinder-Anordnung nach Anspruch 4, **dadurch gekennzeichnet, dass** die abgeschrägte Kante (18) in einer Stufe (19) endet, welche die montierte Hülse (15) fixiert.

6. Kolben-Zylinder-Anordnung nach mindestens einem der vorhergehenden Ansprüche 3 bis 5, **dadurch gekennzeichnet, dass** der radiale Vorsprung (17) des zylinderförmigen Abschnittes (14) umlaufend ausgebildet ist.

7. Kolben-Zylinder-Anordnung nach mindestens einem der vorhergehenden Ansprüche, **dadurch gekennzeichnet, dass** die Hülse (15) aus einem Leichtmetall, vorzugsweise Aluminium, besteht.

## Claims

1. Piston-cylinder arrangement, in particular for a clutch actuation system in a motor vehicle, having a piston (3), which is arranged in axially movable fashion in the interior of a cylinder (2), and having an inductive sensor system, which comprises a conductive target (12) fastened to the piston (3) and comprises a sensor (11) which is fastened to the cylinder (2), wherein the conductive target (12) is in the form of a sleeve (15) which is pushed over an approximately complementary cylindrical section (14) of the piston (3), **characterized in that** the sleeve (15) has a longitudinal slot (16) for temporary expansion during the fastening to the complementary cylindrical section (14) of the piston (3).

2. Piston-cylinder arrangement according to Claim 1, **characterized in that** the cylindrical section (14) is part of a separate bracket element which is connected in non-positively locking and/or positively locking fashion to a piston main body, in particular by being pressed in.

3. Piston-cylinder arrangement according to Claim 1 or 2, **characterized in that** the cylindrical section (14) is delimited by at least one radial projection (17), as far as which the sleeve (15) is pushed onto the piston (3).

4. Piston-cylinder arrangement according to at least one of Claims 1, 2 or 3, **characterized in that** the cylindrical section (14) has, on a side facing toward the sleeve (15), a bevelled edge (18) for guiding the sleeve (15) during the installation process.

5. Piston-cylinder arrangement according to Claim 4, **characterized in that** the bevelled edge (18) ends at a step (19) which fixes the installed sleeve (15).

6. Piston-cylinder arrangement according to at least one of the preceding Claims 3 to 5, **characterized in that** the radial projection (17) of the cylindrical section (14) is of encircling form.

7. Piston-cylinder arrangement according to at least one of the preceding claims, **characterized in that** the sleeve (15) is composed of a light metal, preferably aluminium.

## Revendications

1. Dispositif à piston-cylindre, en particulier pour un système d'actionnement d'embrayage dans un véhicule automobile, comprenant un piston (3) qui est disposé de manière déplaçable axialement à l'intérieur d'un cylindre (2) et un système de capteur inductif comprenant une cible conductrice (12) fixée au piston (3) et un capteur (11) qui est fixé au cylindre (2), la cible conductrice (12) étant réalisée sous forme de douille (15) qui est enfoncée sur une portion (14) du piston (3) de forme cylindrique approximativement complémentaire, **caractérisé en ce que** la douille (15) présente une fente longitudinale (16) pour 1'élargissement temporaire lors de la fixation à la portion (14) du piston (3) de forme cylindrique complémentaire.

2. Dispositif à piston-cylindre, selon la revendication 1, **caractérisé en ce que** la portion de forme cylindrique (14) fait partie d'un élément de retenue séparé qui est connecté à un corps de base de piston par engagement par force et/ou par correspondance de formes, en particulier par pressage.

3. Dispositif à piston-cylindre selon la revendication 1 ou 2, **caractérisé en ce que** la portion de forme cylindrique (14) est limitée par au moins une saillie radiale (17) jusqu'à laquelle la douille (15) est poussée sur le piston (3).

4. Dispositif à piston-cylindre selon au moins l'une quelconque des revendications 1, 2 ou 3, **caractérisé en ce que** la portion de forme cylindrique (14) présente, sur un côté tourné vers la douille (15), une arête biseautée (18) pour le guidage de la douille (15) pendant le montage.

5. Dispositif à piston-cylindre selon la revendication 4, **caractérisé en ce que** l'arête biseautée (18) se termine par un gradin (19) qui fixe la douille montée (15).

6. Dispositif à piston-cylindre selon au moins l'une quelconque des revendications 3 à 5, **caractérisé en ce que** la saillie radiale (17) de la portion de forme cylindrique (14) est réalisée de manière circonférentielle.

7. Dispositif à piston-cylindre selon au moins l'une quelconque des revendications précédentes, **caractérisé en ce que** la douille (15) se compose d'un métal léger, de préférence d'aluminium.
